# NEW EUROPEAN PATENT SPECIFICATION

(11) **EP 0 866 776 B2**
(45) Date of publication and mention of the opposition decision: **17.11.2004**
(45) Mention of the grant of the patent: 15.03.2000
(21) Application number: 96943957.9
(22) Date of filing: 13.12.1996
(51) Int. Cl.: C03C 1/02, C03C 13/06

(54) **PRODUCTION OF MINERAL FIBRES**
HERSTELLUNG VON MINERALFASERN
PRODUCTION DE FIBRES MINERALES

(30) Priority: 15.12.1995 GB 9525641
(43) Date of publication of application: 30.09.1998
(73) Proprietor: Rockwool International A/S, 2640 Hedehusene (DK)
(72) Inventor: KRAGLUND, Arne, DK-2800 Lyngby (DK); VISLER, Torben, DK-3460 Birkerod (DK); RANLOV, Jens, 2920 Charlottenlund (DK); CHRISTENSEN, Vermund, Rust, DK-4000 Roskilde (DK)
(74) Representative: Lawrence, Peter Robin Broughton
(86) International application number: PCT/EP1996/005616
(87) International publication number: WO 1997/022563

(56) References cited:
- WO-A-92/04289
- WO-A-92/09536
- WO-A-93/22251
- WO-A-95/21799
- WO-A-96/14274
- US-A- 2 020 403
- US-A- 4 560 606
- Environmental Health Perspectives vol, 102, Suppl. 05.10.94, p. 91-96, 1994
- Final (Phase I) Report on Alternate Utilization of Foundry Waste Sand, August 1991.
- American Journal of Science, vol. 272, "The viscosity of magmatic silicate liquids: a model for calculation", May 1972
- Goechimica et Cosmochimica Acta Vol. 46. p. 1061-1072 "Viscosity of liquid silica, silicates and alumino-silicates", 1982
- Handbook on the Investment Casting Process, American Foundrymen's Society, Inc, 1993
- Daniel L. Twarog and R. Todd Burnley: "Alternate Utilization of Foundry Sand Waste" Official Exchange Paper at the 59th World Foundry Congress, 20-25 September 1992, Sao Paulo, Brazil and Congress News, dated 22 September 1992.
- V.R. Christensen et al., "Effect of Chemical Composition of man-made Vitreous Fibers on the Rate of Dissolution in Vitro at Different pHs, Environ. Health Perspect., 102(5), 1994,83

## Description

This invention relates to the production of Man-Made Vitreous Fibres (MMVF) that have a relative high content of aluminium, and in particular it relates to the production of such fibres which are biologically soluble, that it is to say they have an acceptable rate of biologically useful degradation when tested in an appropriate liquid.

It is well known to form in a furnace, such as an electric furnace, tank furnace, shaft furnace or a cupola furnace, a mineral melt and to use this melt for various industrial purposes. The mineral melt is generally formed from a blend of minerals selected so that they produce a melt having the desired melting point and other properties, having regard to the intended end use. The mineral materials are usually freshly produced or mined materials such as rock or slag (often after crushing) and sand.

In EP-A-508589 it is proposed to form a melt from a plurality of solid waste streams that are used in proportions such that the melt has a content within certain defined ranges. Materials that are mentioned for use as this plurality of waste streams are municipal incinerator bottom ash, hazardous wastes incinerator bottom ash, baghouse or precipitator dust, steel plant dust, electroplating sludge, electrochemical machining sludge, waste foundry sands, contaminated soils, dried and contaminated sewage solids, cementitious fixation, coal combustion fly ash, inorganic paint pigment residues and spent refractory materials. The furnace can be a coke-fired cupola furnace of the type used in the grey iron casting industry. The melt is drained from the furnace under conditions that allow separation of free metal from the solution of oxides, which can be poured into moulds or quenched.

In JP-A-55140725 mine slime and/or waste enamel and/or waste moulding sand are blended into steel making slag and the resultant blend is melted in an electric furnace and converted into fibres.

Traditionally MMV fibres were made from materials that were economically and geographically convenient to use. However it is now recognised that the solubility of MMV fibres and other properties is very dependent on their chemical analysis, and thus on the analysis of the melt from which the fibres are formed. Accordingly there is need to be able to select the analysis of the melt accurately, having regard to the particular properties that are required. Accordingly it is generally no longer appropriate to use merely those raw materials which are geographically and economically convenient to the plant where the fibres are being made and, instead, it is increasingly necessary to select particular materials having regard to the analysis and properties required of the fibres.

It is common for some or all of the mineral material which is to be incorporated in the melt to be provided in the form of moulded briquettes, and in particular fine material such as sand is usually incorporated into briquettes .

The need to use raw materials selected according to the desired chemical analysis rather than according to economic convenience means that there is a tendency towards an increase in the cost of the raw materials that are used for making these carefully defined MMV fibres. Cost is a particular problem when the desired final blend has an analysis which tends to require materials which are rather expensive. For instance, we have described in W095/34516 that fibres having a very low content of alumina can be made using silica sand which can be recovered foundry sand. However a particular problem arises when it is desired to make fibres having high alumina content, namely above about 14% by weight and often above 18% or 20% by weight.

Throughout this specification all analyses are quoted by weight of the oxides.

It might be thought that it would be economic and convenient to provide such materials using a charge which contains a predetermined amount of a raw material which has high alumina content. For instance the inclusion of alumina sand of the type frequently known as calcined bauxite might appear appropriate. Unfortunately these high alumina raw materials tend to be unavailable in many areas or to be very expensive or both. This places undesirable constraints on the selection of materials that can be used for the manufacture of high alumina MMV fibres.

The Final (Phase 1) Report on Alternative Utilization of Foundry Waste Sand, 1991, by American Foundrymen's Society, Inc proposed use of foundry waste sand and investment casting shells in forming melt for fiberisation and proposes that sand waste should be briquetted.

We describe in WO96/14274 (unpublished at the priority date) that certain fibres having high alumina content are biologically soluble.

The process of the invention is defined in claim 1.

The alumina sand preferably has an alumina content of at least 40% in weight. Preferably it has at least 50% by weight alumina and it can have an alumina content as high as 80% or more.

We have realised that it is satisfactory, and indeed very desirable, to make high alumina MMV fibres from a charge containing briquettes which have been formed utilising alumina sand which is contaminated with foundry residues. As a result it is now possible to use a single batch of alumina sand for two separate processes, thereby gaining significant economic advantages, without incurring any technical disadvantages in either process.

Alumina sand is much too expensive to be used in conventional foundry processes in competition with traditional silica sand. However it does have certain properties that make it very attractive, from a technical point of view, for certain foundry processes. Unfortunately the cost of buying fresh alumina sand and then dumping it after foundry use is a severe deterrent from developing these processes. In the invention, we use the alumina sand for the foundry processes and then we use the resultant contaminated alumina sand for making MMV fibres.

Thus, by the invention, we simultaneously make the foundry process economically viable and provide an economically acceptable source of alumina for the production of high alumina MMV fibres.

The foundry residues are residues that accumulate in the sand when it is used for foundry casting. Thus the used sand will normally be contaminated with residues of binder, such as phenol formaldehyde resin, furan, bentonite or other foundry binder from the casting operation. It may also contain sand fines having a smaller size than the sand would normally have. It may contain residues of metallurgical fines, metal or metal compounds derived from the casting operation. The cast metal can be iron, leading to iron or iron oxide residues. When aluminium is the cast metal, the residues may be of aluminium or aluminium oxide.

Due to the presence of these various residues, the used sand is usually considered unsuitable for any useful process unless it is first subjected to thermo/mechanical regeneration process comprising the steps of crushing, sieving, washing and incinerating to remove the contaminants and fines. However such reclamation processes tend to be very expensive and so render the use of the reclaimed sand uneconomic. For instance such a process is described in Mineral Processing No.8, August 1987, pages 456 to 462 by Bauer, where the significant process stages are magnetic separation fluid bed treatment and counter flow baffling.

In the invention, the contaminated sand is used without significant prior reclamation processes. Indeed, if any reclamation process is conducted, it is usually confined to sieving the sand.

Thus the invention simultaneously solves two problems, namely the provision of an economic source of alumina for high alumina MMV fibres, and a utility for the used sand which will give the used sand sufficient value to render economic its use in the specialised foundry processes.

One advantage of the invention lies in the fact that it is not necessary to remove fines from the contaminated alumina sand before it may be used. As explained above, this was previously always considered necessary if the alumina sand was to be useful. Thus particularly economical use of contaminated alumina sand is made possible by the invention.

In fact, the presence of fines can be advantageous in the invention. Fines exhibit excellent melting and dissolution properties in conventionally used melting processes. This is due to their need for shorter residence times at any given melting temperature than larger particle size alumina sand.

This feature means that it is possible to use higher amounts of high melting point materials such as the contaminated alumina sand in the charge than would otherwise be possible. The presence of fine particle size alumina sand also minimises or eliminates the need to incorporate fluxing agents, and thus avoids the constraints they place on the choice of chemical compositions.

The amount of contaminated alumina sand is at least 5%, usually at least 10% or 20% based on the total mineral charge and often at least 30%. Usually it is not more than 60%, or sometimes 70 or 75%, and generally it is in the range 20 to 40 or 45% by weight of the total mineral charge.

Suitable alumina sands are calcined bauxite, chamotte, andalusite, kyanite, plagioclase, silimanite, mullite and kaolin and fused alumina. Fused spinel is another suitable high Al₂O₃ material.

The use of various high alumina sands in foundry processes is described in the literature, for instance in Heat Transfer of Various Moulding Materials, Locke et al, Trans.Am.Foundrymans Soc., 1954, volume 62, pages 589-600.

Although it is possible for the briquettes which contain the used alumina sand to consist (as regards the inorganic components) solely of that sand, briquettes are usually formed of a blend of at least 10% by weight of the used sand with at least 10% by weight of other inorganic material. Often the amount of used alumina sand is at least 30% and frequently at least 50% or 60% by weight of the inorganic component of the briquettes. The mix from which the briquettes are formed may be a blend of the used alumina sand with virgin inorganic sand or rock but often the briquettes are formed from a blend of the used alumina sand with other inorganic material which includes industrial waste material. Suitable industrial waste materials include converter slag or other slag from steel making processes, glass, mineral fibre cement, power plant ash, wood ash and steel plant dust and MMV fibre products, for instance bonded MMV fibrous material. This fibrous material may be recycled from the process or may be waste, previously manufactured, material.

When it is desired to increase the silica content, it can be convenient to incorporate in the briquettes a used silica foundry sand, as described in PCT/EP95/02109. When it is desired to increase the content of MgO or FeO, olivine foundry sand may be used.

The mineral charge to the furnace may consist solely of the briquettes containing contaminated alumina sand or, more usually, is a mixture of at least 30%, often at least 50% or 60%, and typically up to 80% or more, of such briquettes with other particulate material. This other material may comprise briquettes made from materials free of contaminated alumina sand and/or other mineral material suitable for incorporation in the melt. This additional mineral material may be industrial waste, as discussed above, or may be virgin mineral material that has not previously been used.

Such mineral material, that can be used as part of the non-briquette charge or as components in briquettes, can include materials such as diabase, basalt, dumite, peridotite, pyroxenite, apatite, bauxite, dolomite, iron ore, limestone, rutile, magnesite, magnetite, brucite, burnt lime, slag and other materials suitable for forming a fibre-forming melt. The blend of contaminated alumina sand, other industrial waste and other mineral material should be such that the melt and the fibres have the desired composition.

The composition for the total melt and for the fibres formed from is defined above. The Other elements that can be present include P₂O₅ and B₂O₃.

Preferably the amount of Al₂O₃ is at least 17%, especially at least 18%. Usually it is above 19%, e.g., 20 to 30%. The amount of MgO is usually 2 to 15% and the amount of FeO is usually 5 to 9%. The amount of Na₂O + K₂O is usually 0-6% and the amount of TiO₂ 0-3%. The total amount of the unspecified other element is usually 0-5%.

Preferred fibres have a dissolution rate at pH 4.5 of at least 20 nm per day and the melt preferably has a viscosity at 1400°C of 10 to 70 poise.

Preferred fibres are those which are described and defined in WO96/14454 or in WO96/14274. The method for determining the dissolution rate is defined in those applications.

The briquettes may be made by any suitable method. Generally they are made by bonding inorganic material using a binder, often associated with compression of these briquettes. The binder can be a hydraulic binder such as cement or may be a slag activated with an alkaline agent, as in W092/04289. The binder may comprise a burnt lime which is hydrated on heating in the presence of water, for instance as in the well known lime/sandstone process. The binder may comprise an organic binder, preferably molasses, optionally with burnt lime and usually also with fibres, as described in WO95/34514. The binder may comprise clay.

The briquettes may have conventional dimensions, for instance a minimum dimension of at least 5mm, often at least 20mm and usually at least 40mm and a maximum dimension of up to 300mm but usually not more than around 150 or 200mm.

The furnace may be heated in conventional manner, for instance as an electrical furnace or a tank furnace or, more usually by combustion of combustible material in a cupola furnace. The melt temperature will depend upon the minerals being used and the fibre-forming technique but is generally in the range 1200 to 1600°C, often around 1400 to 1550°C.

Fibre formation can be by conventional techniques such as a spinning cup technique or, preferably, by pouring on to a spinner comprising at least two co-operating spinning wheels, for instance as described in WO92/06047. Thus the fibres may be made by pouring the melt on to a first spinning rotor from which the melt is thrown in sequence on to one or more subsequent spinning rotors off which the fibres are thrown.

The products of the invention can be used for any of the conventional uses of MMV fibres, such as thermal insulation, noise reduction and regulation, fire protection, growth media, reinforcement and fillers.

The following are some examples of the invention:

### Example 1

Charge: 50% diabase + 45% Cement briquette
- Cement Briquette:
   - 13% cement
   - 35% wool waste
   - 12% LD converter slag
   - 30% Bauxite foundry sand
   - 5% Olivine foundry sand
   - 5% power plant bottom ash

Charge Chemistry (wt %):

| SiO₂ | Al₂O₃ | TiO₂ | FeO | CaO | MgO | Na₂O | K₂O | MnO | P₂O₅ |
|---|---|---|---|---|---|---|---|---|---|
| 37.8 | 24.9 | 2.2 | 6.7 | 15.8 | 9.2 | 1.7 | 1.1 | 0.2 | 0.1 |

Melt viscosity at 1400°C: 23.5 Poise.

### Example 2

Charge: 60% diabase + 10% LD converter slag + 35% briquettes.
- Briquette composition
   - 7.5% Molasses
   - 2.5% Burnt lime
   - 10% Olivine foundry sand
   - 35% wool waste
   - 5% LD converter slag
   - 40% Chamotte foundry sand

Charge Chemistry (wt %):

| SiO₂ | Al₂O₃ | TiO₂ | FeO | CaO | MgO | Na₂O | K₂O | MnO | P₂O₅ |
|---|---|---|---|---|---|---|---|---|---|
| 43.8 | 16.4 | 2.5 | 8.3 | 14.8 | 10.8 | 1.8 | 1.1 | 0.3 | 0.2 |

Melt viscosity at 1400 °C: 18.6 Poise

### Example 3

Charge: 25% diabase + 5% LD converter slag + 70% Cement briquette.
- Cement briquette:
   - 13% Cement
   - 37% Mullite foundry sand
   - 18% Olivine foundry
   - 22% Wool waste
   - 10% LD converter slag

Charge Chemistry (wt %):

| SiO₂ | Al₂O₃ | TiO₂ | FeO | CaO | MgO | Na₂O | K₂O | MnO | P₂O₅ |
|---|---|---|---|---|---|---|---|---|---|
| 33.5 | 28.8 | 1.0 | 5.7 | 17.5 | 11.5 | 1.0 | 0.5 | 0.3 | 0.3 |

Melt viscosity at 1400°C: 17.2 Poise

### Example 4

Charge: 20% diabase + 20% LD converter slag + 60% briquettes.
- Briquette composition:
   - 7.5% Molasses
   - 2.5% Burnt lime
   - 30% Wool waste
   - 10% Olivine foundry sand
   - 50% Kaoline foundry material

Charge Chemistry (wt %):

| SiO₂ | Al₂O₃ | TiO₂ | FeO | CaO | MgO | Na₂O | K₂O | MnO | P₂O₅ |
|---|---|---|---|---|---|---|---|---|---|
| 40.6 | 19.0 | 1.2 | 7.8 | 19.2 | 8.8 | 1.8 | 0.5 | 0.5 | 0.5 |

Melt viscosity at 1400°C: 16.3 Poise

## Claims

1. A method of making man made vitreous fibres comprising forming moulded briquettes of particulate mineral material which includes foundry sand waste, forming a melt by melting in a cupola furnace a charge comprising the briquettes and forming fibres from the melt, **characterised in that**
the melt and the fibres have an analysis including, by weight of oxides,
| | |
|---|---|
| SiO₂ | 32 to 48% |
| Al₂O₃ | 16 to 30% |
| CaO | 10 to 30% |
| MgO | 2 to 20% |
| FeO | 2 to 15% |
| Na₂O + K₂O | 0 to 12% |
| TiO₂ | 0 to 6% |
| Other Elements | 0 to 15% |
the briquettes are bonded briquettes formed of the particulate mineral material using a binder,
the foundry sand waste comprises alumina sand which is contaminated with foundry residue
the alumina sand has an Al₂O₃ content of at least 30% by weight of the alumina sand
and the alumina sand is at least 5% of the total mineral content of the charge.

2. A method according to claim 1 in which the amount of contaminated alumina sand in the briquettes is 10 to 75% based on the weight of the total mineral charge.

3. A method according to any preceding claim in which the fibres have solubility at pH 4.5 of at least 20nm per day.

4. A method according to any preceding claim in which the amount of Al₂O₃ in the melt and the fibres is at least 18%.

5. A method according to any preceding claim comprising the preliminary step of using the alumina sand as a foundry casting material.

6. A method according to any preceding claim in which the briquettes are formed additionally from other industrial waste selected from converter slag or other slag from steel making processes, glass, mineral fibre cement, power plant ashes, wood ash, steel plant dust and man made vitreous fibre products, wherein the total amount of contaminated alumina sand and other industrial waste is at least 50% based on the total mineral charge.

7. A process according to any preceding claim in which the fibres are made by pouring the melt on to a first spinning rotor from which the melt is thrown in sequence on to one or more subsequent spinning rotors off which the fibres are thrown.

## Patentansprüche

1. Verfahren zur Herstellung von künstlichen glasartigen Fasern, umfassend das Bilden von geformten Briketts aus teilchenförmigem mineralischem Material, das Gießereisandabfall beinhaltet, das Bilden einer Schmelze durch Schmelzen einer die Briketts umfassenden Charge in einem Kupolofen und das Bilden von Fasern aus der Schmelze, **dadurch gekennzeichnet, dass** die Schmelze und die Fasern eine Analyse aufweisen, die, bezogen auf das Oxidgewicht, umfasst:
| | |
|---|---|
| SiO₂ | 32 bis 48% |
| Al₂O₃ | 16 bis 30% |
| CaO | 10 bis 30% |
| MgO | 2 bis 20% |
| FeO | 2 bis 15% |
| Na₂O + K₂O | 0 bis 12% |
| TiO₂ | 0 bis 6% |
| Andere Elemente | 0 bis 15% |
die Briketts gebundene Briketts sind, die aus dem teilchenförmigen Material unter Verwendung eines Bindemittels gebildet sind,
der Gießereisandabfall Aluminiumoxid-Sand umfasst, der mit Gussrückständen verunreinigt ist,
der Aluminiumoxid-Sand einen Al₂O₃-Gehalt von mindestens 30 Gewichtsprozent des Aluminiumoxid-Sands aufweist
und der Aluminiumoxid-Sand mindestens 5% des Gesamtmineralgehalts der Charge ausmacht.

2. Verfahren nach Anspruch 1, bei dem die Menge an verunreinigtem Aluminiumoxid-Sand in den Briketts 10 bis 75%, bezogen auf das Gewicht der gesamten mineralischen Charge, beträgt.

3. Verfahren nach irgendeinem vorhergehenden Anspruch, bei dem die Fasern bei einem pH von 4,5 eine Löslichkeit von mindestens 20 nm pro Tag aufweisen.

4. Verfahren nach irgendeinem vorhergehenden Anspruch, bei dem die Menge an Al₂O₃ in der Schmelze und den Fasern mindestens 18% beträgt.

5. Verfahren nach irgendeinem vorhergehenden Anspruch, das den vorgeschalteten Schritt der Verwendung des Aluminiumoxid-Sandes als Formgussmaterial umfasst.

6. Verfahren nach irgendeinem vorhergehenden Anspruch, bei dem die Briketts zusätzlich aus anderem Industrieabfall, der aus Konverterschlacke oder anderer Schlacke aus Stahlerzeugungsprozessen, Glas, Mineralfaserzement, Kraftwerksaschen, Holzasche, Stahlwerkstaub und künstlichen glasartigen Faserprodukten ausgewählt ist, gebildet sind, wobei die Gesamtmenge an verunreinigtem Aluminiumoxid-Sand und anderem Industrieabfall mindestens 50%, bezogen auf die gesamte mineralische Charge, beträgt.

7. Verfahren nach irgendeinem vorhergehenden Anspruch, bei dem die Fasern hergestellt werden, indem die Schmelze auf einen ersten rotierenden Rotor gegossen wird, von dem die Schmelze der Reihe nach auf einen oder mehrere aufeinanderfolgende rotierende Rotoren geschleudert wird, von denen die Fasern abgeschleudert werden.

## Revendications

1. Méthode de fabrication de fibres vitreuses synthétiques comprenant la formation de briquettes moulées à partir d'une matière minérale en particules, qui inclut des résidus de sable de fonderie, la formation d'un produit fondu par fusion, dans un cubilot, d'une charge comprenant les briquettes et la formations de fibres à partir du produit fondu, **caractérisée en ce que**
le produit fondu et les fibres ont une analyse incluant, en masse d'oxydes,
| | |
|---|---|
| SiO₂ | 32 à 48 % |
| Al₂O₃ | 16 à 30 % |
| CaO | 10 à 30 % |
| MgO | 2 à 20 % |
| FeO | 2 à 15 % |
| Na₂O + K₂O | 0 à 12 % |
| TiO₂ | 0 à 6 % |
| Autres éléments | 0 à 15 % |
les briquettes sont des briquettes liées formées à partir de la matière minérale en particules en utilisant un liant,
les résidus de sable de fonderie comprennent du sable à l'alumine contaminé par des résidus de fonderie,
le sable à l'alumine a un taux d'Al₂O₃ d'au moins 30 % en masse par rapport au sable à l'alumine
et le sable à l'alumine représente au moins 5 % de la teneur totale en matière minérale de la charge.

2. Méthode selon la revendication 1, dans laquelle la quantité de sable à l'alumine contaminé dans les briquettes est de 10 à 75 % en masse par rapport à la charge minérale totale.

3. Méthode selon l'une quelconque des revendications précédentes, dans laquelle les fibres ont une solubilité à pH 4,5 d'au moins 20 nm par jour.

4. Méthode selon l'une quelconque des revendications précédentes, dans laquelle la quantité d'Al₂O₃ dans le produit fondu et les fibres est d'au moins 18 %.

5. Méthode selon l'une quelconque des revendications précédentes, comprenant l'étape préliminaire d'utilisation du sable à l'alumine comme matière pour le coulage de fonderie.

6. Méthode selon l'une quelconque des revendications précédentes, dans laquelle les briquettes sont formées en outre à partir d'autres déchets industriels choisis parmi des scories de convertisseurs ou d'autres scories des procédés d'élaboration de l'acier, du verre, du ciment à fibres minérales, des cendres de centrales électriques, des cendres de bois, de la poussière d'aciérie et des produits de fibres vitreuses synthétiques, où la quantité totale de sable à l'alumine contaminé et d'autres déchets industriels est d'au moins 50 % par rapport à l'ensemble de la charge minérale.

7. Procédé selon l'une quelconque des revendications précédentes, dans lequel les fibres sont fabriquées en versant le produit fondu sur un premier rotor de filage duquel le produit fondu est projeté successivement sur un ou plusieurs rotors de filage successifs desquels on récupère les fibres.
